# EUROPEAN PATENT SPECIFICATION

(11) **EP 2 213 022 B1**
(45) Date of publication and mention of the grant of the patent: **13.02.2013**
(21) Application number: 07821659.5
(22) Date of filing: 22.10.2007
(51) Int. Cl.: H04B 10/291, H04J 14/02

(54) **SPECTRAL TILT COMPENSATION**
KOMPENSATION DER SPEKTRALEN NEIGUNG
COMPENSATION D'INCLINAISON SPECTRALE

(43) Date of publication of application: 04.08.2010
(73) Proprietor: Telefonaktiebolaget LM Ericsson (publ), 164 83 Stockholm (SE)
(72) Inventor: BRUNO, Gianmarco, I-16158 Genova (IT); MONGIARDINI, Edoardo, I-16011 Arenzano (Ge) (IT)
(74) Representative: Parkinson, Neil Scott
(86) International application number: PCT/EP2007/061295
(87) International publication number: WO 2009/052855

(56) References cited:
- EP-A- 1 686 710
- US-A1- 2004 001 710
- US-A1- 2005 094 253
- CASPAR C ET AL: "Extension of All-Optical Network-Transparent Domains Based on Normalized Transmission Sections" JOURNAL OF LIGHTWAVE TECHNOLOGY, IEEE SERVICE CENTER, NEW YORK, NY, US, vol. 22, no. 6, 1 June 2004 (2004-06-01), pages 1439-1453, XP011113658 ISSN: 0733-8724
- TORII K ET AL: "Impact of stimulated roman scattering between wdm signals over an ultra-wide bandwidth" OPTICAL FIBER COMMUNICATION CONFERENCE. (OFC). POSTCONFERENCE DIGEST. ATLANTA, GA, MARCH 23 - 28, 2003; [TRENDS IN OPTICS AND PHOTONICS SERIES. (TOPS)], WASHINGTON, DC : OSA, US, vol. TOPS. VOL. 86, 23 March 2003 (2003-03-23), pages 332-334, XP010680104 ISBN: 978-1-55752-746-2

## Description

### TECHNICAL FIELD

The present invention relates to a method of compensating for spectral tilt in an optical transmission system, and to associated apparatus. Embodiments of the present invention are particularly suitable for, but not limited to, use in WDM (Wavelength Division Multiplexed) optical communication networks.

### BACKGROUND

Wavelength division multiplexing is the transmission of several different signals via a single optical fibre, by sending each signal ("channel") at a slight different optical frequency or wavelength. A multiplexer is used to combine the different channels together into an optical signal for transmission, and a demultiplexer is used to separate the channels.

WDM optical transmission systems or networks are typically composed of a number of spans, and include a variety of network elements such as terminals, line amplifiers, and add/drop nodes. It is known that it is desirable to control the power levels across all of the channels in a WDM system. The channels lose optical power ("span loss") as they are transmitted over each span of optical fibre. If the transmitted power is too low in any channel then bit errors can result from noise at the receiver. If the transmitted power is too high, then bit errors can result due to spectral distortions e.g. caused by non-linear propagation impairments. To prevent such effects, it is thus typically desirable to equalize power levels across all channels in a WDM system.

Correct implementation of power equalisation allows the system reach to be increased, as more nodes can be cascaded. In addition, nonlinear effects can be better predicted, exploited and controlled. In re-configurable optical systems, spectral distortion of the WDM signal is particularly significant, as the pattern of activated channels in the WDM signal can change over time in response to the traffic requests.

One known cause of spectral distortion is SRS (Stimulated Raman Scattering). SRS causes a spectral power gradient or spectral tilt i.e. a variation in the power of the optical signal (which typically comprises a plurality of channels) as a function of wavelength. Such a spectral tilt results in different channels having different optical powers. In optical transmission systems utilising WDM, short wavelength channels interact with long wavelength channels via SRS. The net effect is to increase the apparent span loss for short wavelength channels, and to decrease the apparent span loss for longer wavelength channels. The degree of tilt (i.e. the gradient of the variation of power with wavelength) varies with the total optical power of all of the wavelengths.

A variety of solutions have been proposed to address the issue of spectral tilt. In many instances, such solutions require additional equipment and/or communication links (communication channels) between nodes.

For example, US6,275,313 describes how the tilt due to SRS is approximately linear on a dB/nm scale, and depends solely on total input power and not on the input power distribution. US6,275,313 suggests that the total input power to the fibre should be maintained at a constant level, such that the resulting gradient can be compensated for or cancelled by using a fixed optical filter. In particular, it is suggested that an optical control signal is provided at a power level over the fibre, in addition to the plurality of optical communications signals, such that the total power is maintained at a pre-determined value irrespective of the number of the optical communication signals.

A disadvantage of such an approach is that additional equipment is needed (i.e. additional lasers, couplers, the linear filter and a variable optical amplifier). Such additional in-line components degrade noise performance, leading to an increase in the optical power necessary for a pre-determined span budget. Additionally, the optical filter used to compensate for the Raman gain tilt must be shaped to the fibre type and length.

US patent application US2004/0001710 A1 proposes an alternative solution, in which the gain of an optical amplifier is changed so as to cause a gain gradient in the optical amplifier to compensate for the SRS induced spectral power gradient. US2004/0001710 A1 also describes how a further gain tilt can be added according to a length of fibre span, to compensate for fibre attenuation tilt.

### SUMMARY

It is an aim of embodiments of the present invention to provide a method of spectral tilt compensation that substantially addresses one or more problems of the prior art, whether referred to herein or otherwise.

In a first aspect, the present invention relates to a method of compensating for spectral tilt in an optical transmission system. The system comprises at least one span of optical waveguide for transmission of an optical signal and at least one optical amplifier for amplifying a power of said optical signal. The method comprises controlling said optical amplifier to provide a gain tilt to offset a spectral tilt effect dependent upon a property of said optical signal. The method also comprises separately applying a predetermined spectral tilt to the optical signal to offset a spectral tilt effect dependent upon a property of said span and independent of the optical signal power.

Such a method separately offsets spectral tilt that arises due to a property of the optical signal (e.g. the total power) from the spectral tilt that arises due to the span properties (e.g. due to optical fibre attenuation). The present inventors have realised that such an approach provides a relatively high resilience to channel faults and to variations in the traffic load, and is thus is particularly well-suited for dynamically reconfigurable meshed networks in which the traffic pattern may change. Further, the method may be implemented in a number of existing networks, without the need for additional equipment. Advantageously, the method does not require that information is exchanged between network nodes i.e. the method does not require a communication link between nodes.

The step of applying a predetermined spectral tilt to the optical signal may comprise:
attenuating the optical signal using a transmission element having a wavelength dependent attenuation.

The optical transmission system may comprise at least one optical transmitter for input of the optical signal to the optical waveguide, and the step of applying a predetermined spectral tilt to the optical signal may comprise: said optical transmitter inputting the optical signal to the optical waveguide with the optical signal having a wavelength dependent power profile.

Said span of optical waveguide may extend between a first node and a second node, the optical signal being transmitted from the first node to the second node, and the step of applying a predetermined spectral tilt to the optical signal may be performed at the first node.

The spectral tilt effect dependent upon a property of said span may comprise a wavelength dependent attenuation of the optical signal by the waveguide.

The optical transmission system may comprise at least one dispersion compensating module having a wavelength dependent attenuation, the spectral tilt effect dependent upon a property of said span comprising the wavelength dependent attenuation of said dispersion compensating module.

The method may further comprise the steps of: determining at least one value indicative of the spectral tilt effect dependent upon a property of said span; and determining the predetermined spectral tilt to apply to the optical signal based upon said determined value.

Said value may be determined by making a measurement indicative of a wavelength attenuation of at least said span.

The spectral tilt effect dependent upon a property of said span may be dependent upon a linear dielectric response of said span.

The spectral tilt effect dependent upon a property of said optical signal may be dependent upon a nonlinear dielectric response of said span.

The spectral tilt effect dependent on a property of said optical signal may comprise spectral tilt caused by the optical signal experiencing stimulated raman scattering within the optical waveguide.

The optical transmission system may comprise a dispersion compensating module, and the spectral tilt effect dependent upon a property of said optical signal may comprise spectral tilt due to the optical signal experiencing stimulated raman scattering within the dispersion compensating module.

The property of said optical signal may be the power of the optical signal.

The step of controlling said optical amplifier may comprise: determining a value indicative of said property of the optical signal; and setting the gain tilt of said optical amplifier in dependence upon the determined value.

The optical signal may comprise a plurality of channels, and the step of controlling said optical amplifier may comprise: determining if there is a change in channel loading of the optical signal occurring; and maintaining the gain tilt of said optical amplifier at a constant level whilst there is a change in channel loading occurring.

In a second aspect, the present invention provides a data carrier carrying computer readable instructions for controlling a computer to carry out the method as described above.

In a further aspect, the present invention provides a computer apparatus comprising:
a program memory storing processor readable instructions; and a processor configured to read and execute instructions stored in said program memory, wherein said processor readable instructions comprise instructions for controlling the processor to carry out the method as described above.

In another aspect, the present invention provides an optical transmission system comprising at least one span of optical waveguide for transmission of an optical signal and at least one optical amplifier for amplifying a power of said optical signal. The optical transmission system comprises at least one amplifier controller arranged to control said optical amplifier to provide a gain tilt to offset a spectral tilt effect dependent upon a property of said optical signal. The optical transmission system further comprises a separate spectral tilt apparatus arranged to apply a predetermined spectral tilt to the optical signal to offset a spectral tilt effect dependent upon a property of said span and independent of the optical signal power.

The spectral tilt apparatus may comprise a transmission element having a wavelength dependent attenuation for applying at least a portion of the predetermined spectral tilt by attenuation of the optical signal.

The spectral tilt apparatus may comprise at least one optical transmitter for input of the optical signal to the optical waveguide, said optical transmitter being arranged to input the optical signal to the optical waveguide with the optical signal having a wavelength dependent power profile.

Said optical amplifier may comprise a doped fibre amplifier.

Said span may comprise a plurality of spans, and said optical amplifier may comprise a plurality of optical amplifiers, said amplifier controller being arranged to control said optical amplifiers to provide said gain tilt.

In a further aspect, the present invention provides a wavelength division multiplexed optical communication network comprising an optical transmission system as described above.

### BRIEF DESCRIPTIONS OF THE DRAWINGS

Preferred embodiments of the present invention will now be described, by way of example only, with reference to the accompanying drawings, in which:
Figures 1A, 1B & 1C are graphs showing variations in linear and non-linear components of the attenuation of a span for three different channel loadings;
Figures 2A & 2B are schematic diagrams of an optical transmission system, with graphs illustrating the performance of the system components under two different channel loadings to indicate the problems associated with attempting to compensate spectral tilt solely using gain tilt under changing channel loadings;
Figure 3 is a schematic diagram of an optical transmission system in accordance with an embodiment of the present invention;
Figures 4A & 4B are schematic diagrams illustrating the performance of a number of components within the transmission system of Figure 3, to compensate for spectral tilt due to linear effects under two different channel loadings;
Figures 5A & 5B are graphs illustrating how the spectral tilt due to non-linear effects such as stimulated raman scattering can be compensated for by controlling the gain tilt of the optical amplifier illustrated in Figure 3;
Figure 6 is a flow chart illustrating a method of compensating for spectral tilt in accordance with an embodiment to the present invention; and
Figure 7 is a schematic diagram of a WDM network including an optical transmission system in accordance with an embodiment to the present invention.

### DETAILED DESCRIPTION

The present inventors have realised that spectral tilt of an optical signal in an optical transmission system can be effectively minimised by separately offsetting the effects of spectral tilt arising from two different physical mechanisms. Such an approach is particularly advantageous under changing channel conditions, as the error in the per-channel power is then reduced compared with prior art solutions. The number of channels in an optical signal may change due to a change in the traffic load and/or due to channel faults.

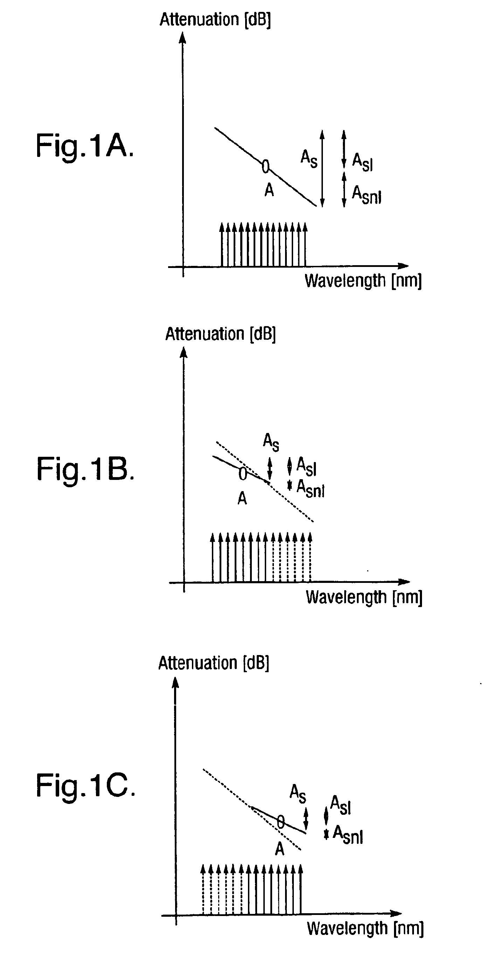

Figure 1A is a graph indicating a typical wavelength dependent attenuation of a span of optical waveguide, that would be experienced by a predetermined optical signal. The optical signal comprises a plurality of channels, with each channel being located at a different optical wavelength. In the illustrated example, the optical signal comprises fourteen channels. Within Figure 1A, and within the figures generally, the centre wavelengths of each of the channels forming the optical signal are indicated by solid arrows The arrow length is indicative of (e.g. proportional to) the optical power of the channel.

Within Figure 1A, it will be seen that such an optical signal would experience a spectral tilt, with shorter wavelength channels within the optical signal experiencing greater attenuation than the longer wavelength channels. The attenuation of the span can be described in terms of the average attenuation A (typically measured in dB) and an attenuation slope Aₛ (i.e. the variation in attenuation with wavelength, typically measured in dB/nm). The present inventors have appreciated that the attenuation of the span will arise not only from the optical waveguide (e.g. the optical fibre), but also from other passive devices located along the span e.g. dispersion compensating modules. A dispersion compensation module (DCM) is an optical element or apparatus arranged to compensate for dispersion (e.g. chromatic dispersion) of an optical waveguide, and may be implemented by providing an optical fibre having the opposite dispersion characteristics to that of the optical waveguide used for transmission.

The attenuation slope Aₛ can be regarded as the net result of the attenuation characteristics arising from two different physical mechanisms or effects. A first effect arises due to the intrinsic properties of the optical waveguide (and any other passive devices) and is independent of the number of channels, channel spacing and per channel power within the optical signal. The component of the attenuation slope provided by this first effect is abbreviated herein using Aₛₗ, and is referred to herein as the linear contribution or component to the attenuation slope. This linear contribution arises due to the linear (power-independent) dielectric response of the optical waveguide and/or passive components.

The magnitude of the second effect varies with (i.e. is dependent upon) one or more properties of the optical signal including channel count, channel power, channel spacing and polarising states of the channels within the optical signal. The component of the attenuation slope arising from the second effect is referred to herein as the non-linear contribution Aₛₙₗ. This nonlinear contribution arises due to the nonlinear dielectric response of materials forming the optical waveguide and/or passive components within the optical transmission system. A number of nonlinear effects exist that will attenuate the optical signal, including SBS (Stimulated Brillouin Scattering) and SRS (Stimulated Raman Scattering). Typically, the most significant nonlinear effect that produces spectral tilt is SRS. The effect of SRS is to increase the apparent span loss for (i.e. provide higher attenuation of) short wavelength channels, and to decrease the apparent span loss for longer wavelength channels.

Each of the linear and nonlinear contributions give rise to a spectral tilt effect, with the spectral tilt slope or gradient due to the nonlinear contribution varying with the properties of the optical signal.

For example, Figure 1B indicates the wavelength-dependent attenuation provided by the optical waveguide shown in Figure 1A, but for an optical signal comprising only the eight lower wavelength channels, whilst Figure 1C illustrates the corresponding attenuation for an optical signal comprising only the eight upper wavelength channels. In the Figures, the dotted arrows represent unoccupied channels. As the optical signals in both Figures 1B & 1C contain fewer channels than the optical signal in Figure 1A, and as the per-channel power is approximately the same in each instance, the nonlinear contribution to the attenuation slope (Aₛₙₗ) has decreased. However, the attenuation slope due to the linear contribution (Aₛₗ) remains constant i.e. the attenuation gradient (dB/nm) remains constant. The total attenuation slope Aₛ is therefore less than that that in Figure 1A. Thus, the total spectral tilt arising due to the attenuation illustrating in Figures 1B & 1C is mainly due to the spectral tilt effect arising from the linear contribution, and will be less than that arising from the attenuation shown in Figure 1A.

It will be observed that in Figure 1B the average attenuation A is higher than in Figure 1C. The average attenuation A of a span depends only on the position of the centre of the distribution of channels (the "barycentre"). The average attenuation A is related to the linear contribution. The average attenuation illustrated in Figure 1B is higher than that in Figure 1C, as the barycentre of the channels present is positioned in a region where the linear attenuation is higher.

The present inventors have realised that due to the two different mechanisms that give rise to the attenuation slope (i.e. due to the two different spectral tilt effects), compensation for spectral tilt using only an apparatus such as an optical amplifier can prove problematic and lead to errors when the channel pattern present in an optical signal changes.

In order to provide the desired per-channel power, optical amplifiers are usually provided with an on-board controller that detects any significant input power variation, and emulates a constant-gain mechanism to a first-order approximation. Such a controller keeps constant the per-channel power with respect to variations in the span loss and changes in the channel load.

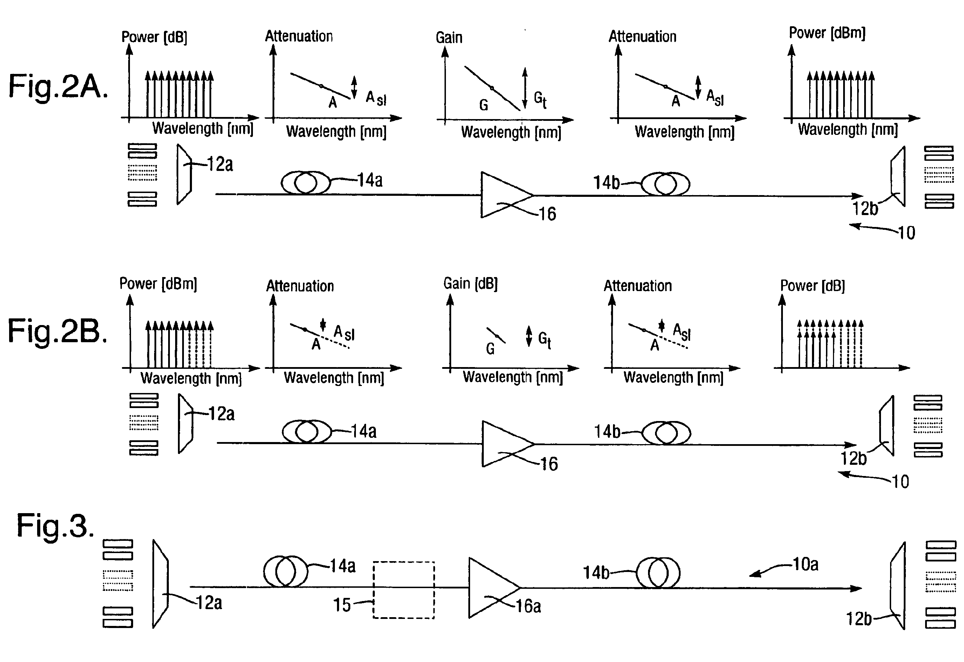

As will be described with reference to Figures 2A & 2B, such variable optical amplifiers cannot compensate accurately for the change in spectral tilt under changing channel conditions, as they cannot accurately compensate for the change in the effect of linear contribution due to the spectral tilt. In Figures 2A & 2B, for convenience, only the linear contribution to the attenuation slope will be considered.

Figures 2A & 2B each illustrate an optical transmission system 10 comprising an optical transmitter 12a for transmitting an optical signal to an optical receiver 12b via a span of optical waveguide 14a, 14b. Located along the span of optical waveguide 14a, 14b (between span section 14a and span section 14b) is an optical amplifier 16. The optical transmission system 10 used in Figure 2A is the same as that used in Figure 2B. A graph showing the power distribution with wavelength of (i.e. the channels in) the optical signal input to the optical waveguide 14a, 14b by the transmitter 12a is shown above the transmitter 12a, with a corresponding graph showing the optical signal received by receiver 12b indicated above receiver 12b.

In both Figures, each solid arrow indicates a separate channel, with the arrow length indicating the relevant power within that channel. The dotted arrows and arrow portions in Figure 2B represent the difference between the channels transmitted in the optical signal for Figure 2A compared with the optical signal for Figure 2B. It will be seen that the optical signal input to the waveguide in Figure 2B only contains a proportion (six out of ten) of the lower wavelength channels.

Above each section of optical waveguide 14a, 14b, a graph indicates the corresponding attenuation as a function of wavelength arising from the linear contribution. The graph above the amplifier 16 shows the gain applied by the amplifier to attempt to offset the spectral tilt experienced by the optical signal due to the wavelength dependent attenuation of both of the waveguide sections 14a, 14b.

It will be observed that in Figure 2A, the received optical signal has the same power distribution as the transmitted optical signal i.e. the gain tilt Gt provided the amplifier (with average gain G) having successfully completely offset the attenuation slope of the waveguide attenuation.

However, it will be seen that in Figure 2B the spectral tilt offset provided by the gain tilt of the amplifier 16 has been less successful. The linear contribution of the slope cannot be exactly compensated for by gain tilt due to the change in channel loading of the optical signal. In particular, whilst the gain tilt has ensured that the received signal contains channels of equal power distribution, it will be seen that each channel is of lower power than originally transmitted (and hence also of lower power than the received signal in Figure 2A). It is thus impossible to recover the linear attenuation slope acting on the gain tilt, using such an optical amplifier, due to the change in the barycentre of the channel pattern with the optical signal.

As well as appreciating the existence of this problem, the present inventors have also realised that this problem can be addressed by separately compensating for the spectral tilt effect due to the linear contribution and for the spectral tilt effect due to the nonlinear contribution.

Figure 3 is a schematic diagram of an optical transmission system 10a in accordance with an embodiment of the present invention. Within the figures, identical reference numerals are used to represent similar features. The transmission system 10a includes a transmitter 12a for transmitting an optical signal to a receiver 12b. The transmitter 12a is coupled to the receiver 12b via a span of optical fibre 14a, 14b. The transmitter 12a can be a multiplexer, and the receiver 12b can be a demultiplexer.

A first section of span 14a extends from the transmitter 12a to an optical amplifier 16a. A section of span 14b extends from the optical amplifier 16a to the receiver 12b. The optical amplifier 16a can be any amplifier capable of amplifying the optical signal. The optical amplifier 16a will typically comprise a doped fibre amplifier such as an erbium doped fibre amplifier.

The transmission system 10a further comprises a spectral tilt apparatus 15. The spectral tilt apparatus 15 is arranged to apply a predetermined spectral to the optical signal, to offset a spectral tilt effect dependent upon a property of the span 14a, 14b and independent of the power of the optical signal i.e. to offset a linear tilt effect. The optical amplifier 16a includes an amplifier controller arranged to control the optical amplifier to provide a gain tilt to offset a spectral tilt effect dependent upon a property of the optical signal i.e. a non-linear tilt effect such as the spectral tilt caused by interchannel SRS. The two phenomena that cause spectral tilt are thus addressed by separate compensation mechanisms, with the spectral tilt apparatus 15 offsetting the effects from one cause of the spectral tilt, and the optical amplifier 16a offsetting the effects from a different cause of spectral tilt. Using two different apparatus to separately offset the two different effects provides a higher resilience to channel faults and to variation in the traffic load, as it reduces the error in the per-channel power compared with prior art solutions.

Preferably, the spectral tilt apparatus and the optical amplifier are each arranged to neutralise (i.e. completely compensate for or cancel out) the respective spectral tilt effect. However, it should be appreciated that the term "offset" encompasses the concept that the relevant spectral tilt effect on the optical signal is reduced.

The spectral tilt apparatus 15 is shown in Figure 3 as being positioned adjacent to the optical amplifier 16a. However, it should be appreciated that the optical tilt apparatus 15 could be positioned anywhere within the optical transmission system 10a.

For example, the apparatus 15 could be positioned within the transmitter 12a. Indeed, the transmitter 12a could be arranged to perform the function of the optical tilt apparatus 15, by the optical transmitter 12a being arranged to input the optical signal to the optical waveguide with the optical signal having a wavelength dependent power profile for offsetting the spectral tilt effect dependent on a property of the span e.g. the linear tilt effect.

Alternatively, the optical tilt apparatus could comprise a separate apparatus positioned adjacent the transmitter 12a i.e. to provide the spectral tilt to the optical signal output from the transmitter 12a, before it is input to the optical waveguide span 14a, 14b. Preferably, the spectral tilt apparatus 15 is arranged to pre-compensate for the spectral tilt effect i.e. to pre-tilt the optical signal to counteract the power-independent spectral tilt effect that will be subsequently experienced by the optical signal as it passes along the span of optical waveguide.

The predetermined spectral tilt may be applied to the optical signal to offset the spectral tilt effect dependent upon the property of the span by a single optical device (e.g. the optical transmitter or a transmission element), or by a plurality of such devices (e.g. the combination of the optical transmitter and one of more transmission elements, or a plurality of transmission elements). Thus, the spectral tilt apparatus can comprise a plurality of transmission elements, or can comprise the optical transmitter and one or more transmission elements.

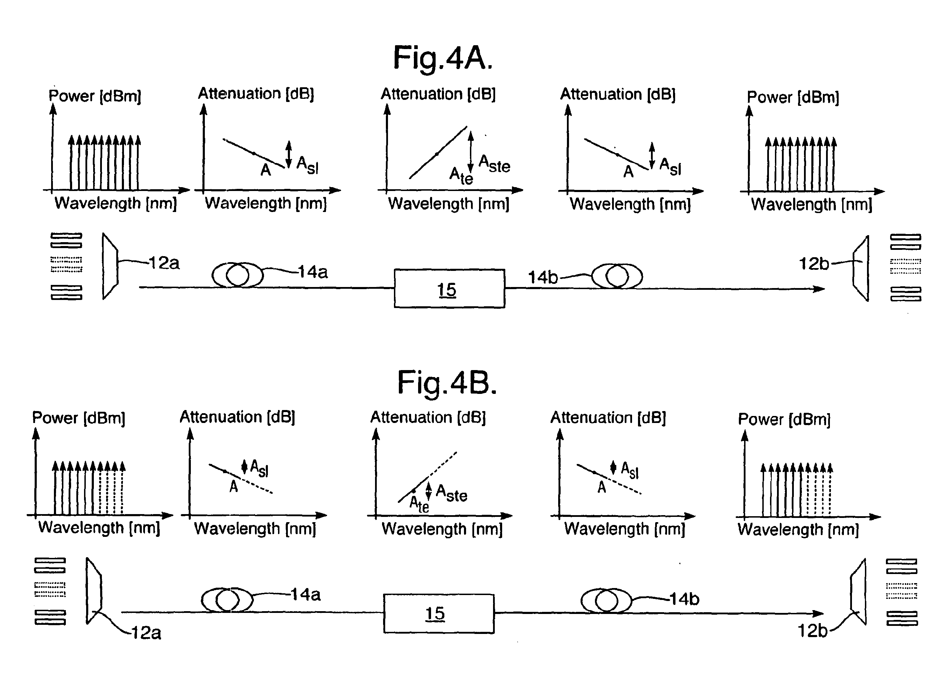

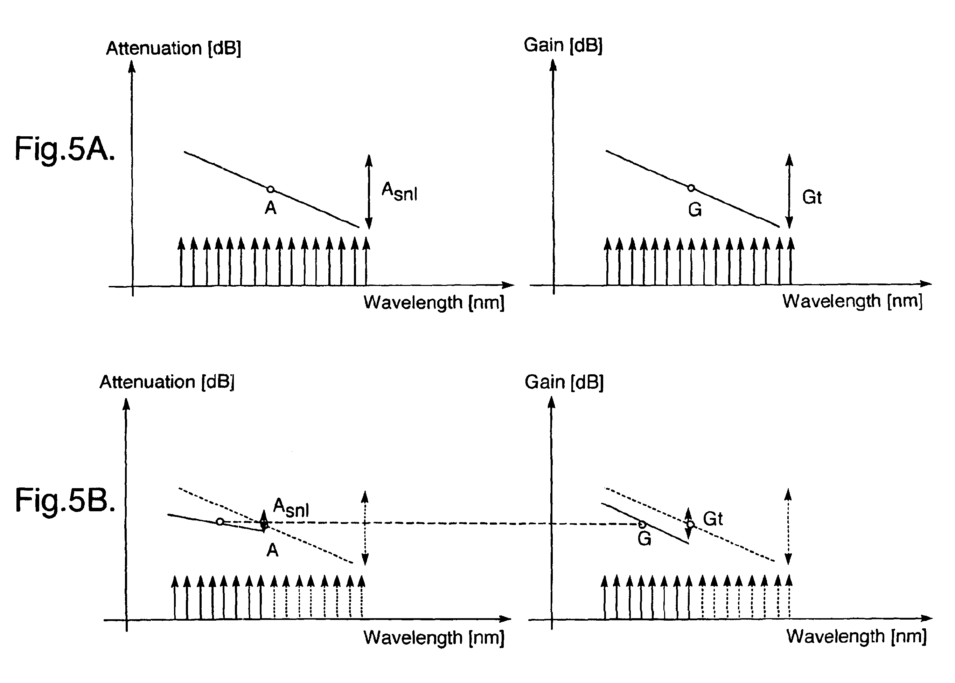

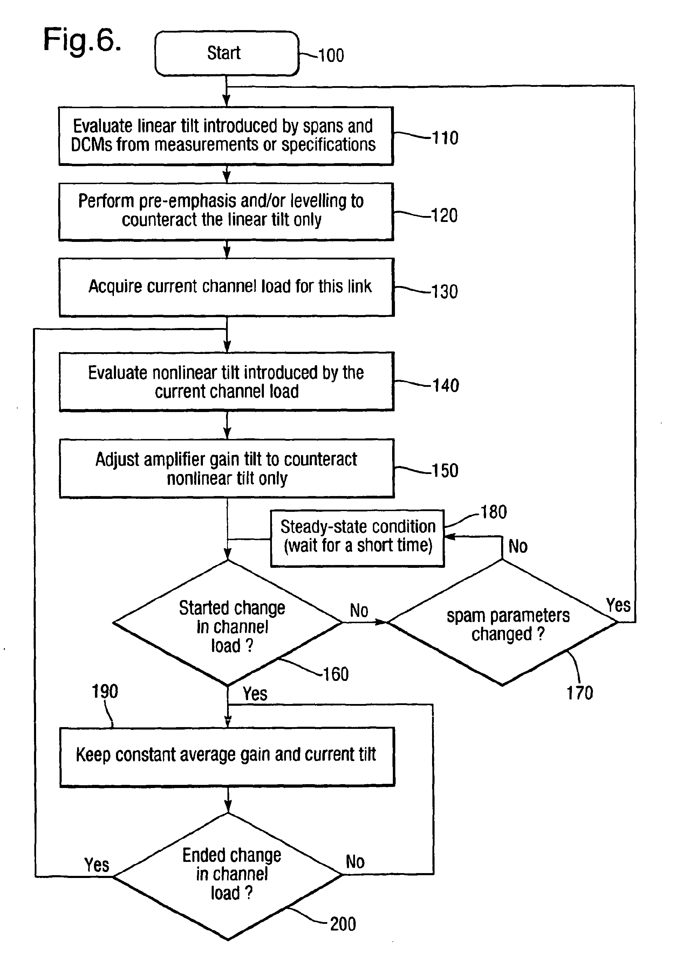

An overview of the functionality of the spectral tilt apparatus 15 and the optical amplifier 16a of the transmission system 10a will now be described with reference to Figures 4A, 4B and 5A, 5B respectively. A method of operation of the transmission system 10a will then be described with reference to Figure 6.

Figures 4A & 5A are schematic diagrams showing the operation of respectively the spectral tilt apparatus 15 and the optical amplifier 16a for an optical signal comprising a first configuration of optical channels, whilst Figures 4B & 5B show respectively the spectral tilt apparatus 15 and the optical amplifier 16a characteristics for spectral tilt compensation of an optical signal comprising a second configuration of channels, in which less channels are present in the optical signal.

As the spectral tilt apparatus 15 and the optical amplifier 16a each separately offset a different spectral tilt effect, the relevant spectral tilt effects and the offsetting thereof are described separately i.e. Figures 4A & 4B only relate to the linear spectral tilt effect offset by the spectral tilt apparatus 15, and Figures 5A & 5B only relate to the nonlinear spectral tilt effect offset by the optical amplifier 16a. The total spectral tilt experienced by an optical signal will of course arise from the combination of the two effects.

Figures 4A & 4B include schematic diagrams of the relevant components of the optical transmission system 10a, with a graph indicative of the performance of each component above that component. It should be noted that Figures 4A & 4B only relate to the components that give rise to the linear component of the spectral tilt, and to the components that compensate for that linear component; hence, Figures 4A and 4B do not illustrate the variable optical amplifier 16a.

Graphs above the transmitter 12a and the receiver 12b in each figure illustrate respectively the power distribution of the transmitted optical signal and the received optical signal. A graph above each waveguide section 14a, 14b shows the wavelength dependent attenuation experienced by the optical signal as it is transmitted along that waveguide section, with the average attenuation being indicated by A, and the attenuation slope due to the linear effect by Aₛₗ.

To compensate for the spectral tilt effect caused by the linear contribution, the spectral tilt apparatus 15 has an attenuation characteristic that is wavelength dependent, and it slopes in the opposite direction to the linear slope. The average attenuation experienced by the optical signal as it is transmitted through the spectral tilt apparatus 15 is Aₜ, with the attenuation slope of the apparatus 15 being Aₛₜₑ.

As can be seen, such a spectral tilt apparatus 15 can thus apply a fixed attenuation characteristic, that compensates for the linear spectral tilt effect irrespective of the number of channels present in the optical signal (and hence irrespective of the total power of the optical signal). The power of the optical signal received at receiver 12b is of the same power (and has the same power distribution) as the signal input by transmitter 12a due to the linear spectral tilt being compensated for the spectral tilt apparatus 15. The spectral tilt apparatus 15 acts as leveller, ensuring that the linear tilt effect is offsets, so that each received channel is of equal power. The total optical signal power (e.g. the power within each optical channel) is also amplified by the amplifier 16a, so as to ensure that the received signal total power and power distribution is the same as that of the transmitted signal. Thus, the amplifier gain offsets the net attenuation due to the leveller and the optical fibre.

Figures 5A & 5B each illustrates two graphs, one showing the channels present in the optical signal with the relevant nonlinear attenuation slope (Aₛₙₗ) arising from that optical signal, and the second showing how the gain tilt Gnt (i.e. the variation in gain with amplitude) of the optical amplifier is applied to counteract the spectral tilt effect due to the nonlinear attenuation effect. For simplicity, the linear contribution of the attenuation slope is not illustrated. It is assumed that the linear tilt effect is properly compensated for by passive levelling as indicated in Figure 4A & 4B, or by pre-emphasis i.e. controlling the input power of the optical signal input to the optical waveguide, so as to ensure that a predetermined (e.g. uniform) power distribution of optical signal is received at the receiver 12b, after attenuation has occurred.

As can be seen by comparing Figures 5A & 5B, when the number of channels present in the optical signal decreases (thus leading to a net decrease in the total power of the optical signal), the attenuation slope is correspondingly reduced. However, the average attenuation A (which depends solely on the linear contribution) does not change. Thus, the gain tilt of the amplifier can be adjusted and the amplifier gain adjusted, so as to compensate for the change in the nonlinear component of the attenuation. As shown by Figure 5B, and as explained further below, it is preferable to keep the gain and gain tilt constant during a channel count transition.

At least as far as spectral tilt is concerned, the dominant nonlinear effect is due to SRS. SRS is an ultra fast mechanism, and hence it is not practical to allow the amplifier gain tilt to instantly follow the variation in channel count. In any event, given that the average attenuation does not change with channel count, the best average gain G should preferably be maintained at the same level during changes in the number of channels present in the optical signal. During the transitory time, the proposed control method is to maintain constant the average gain of the optical amplifier 16a, and to also not change the gain tilt. The gain tilt would then be recalculated once a new, static condition is reached i.e. once the number of channels present in the optical signal has remained constant for a predetermined time interval. A method of compensating for spectral tilt in an optical transmission system will now be described, with reference to Figure 6.

Figure 6 is a flow chart indicating the steps in accordance with a method of compensating for spectral tilt. In this particular method, not only is the tilt effect due to each span (or spans) of optical waveguide (e.g. fibre) compensated for but also the tilt effects due to the presence of DCM(s). For example, often a DCM will include DCF (dispersion compensating fibre), which is optical fibre having the opposite dispersion characteristics to the transmission fibre. The present inventors have realised that it is therefore desirable to compensate not only for the linear and nonlinear spectral tilt effects of the transmission fibre, but also for the corresponding spectral tilt effects of the DCM. For example, the optical fibre within DCM can represent 15% of the total fibre within an optical transmission link, and thus the spectral tilt introduced by the DCM can significantly effect the optical signal.

The method is started (100) by first evaluating the linear tilt effect introduced by the span (or spans) of optical waveguide, and the DCMs (step 110). For example, a value (or set of values) indicative of the spectral tilt effect is determined. This value/set of values can be determined by calibration i.e. measurement of the relevant fibre properties e.g. by providing one or more test optical signals along the optical waveguide span, and measuring the resulting spectral tilt of those signals. Alternatively, the likely effect of the linear tilt can be calculated based upon the known characteristics of the optical waveguide and DCMs e.g. the manufacturer specifications.

Subsequently (step 120) the spectral tilt apparatus is arranged or controlled to counteract the linear tilt effects. As indicated previously, this can be performed by a levelling type apparatus, or by performing pre-emphasis i.e. with the transmitter 12a providing the optical signal with a predetermined spectral tilt, such that the linear tilt effect of the optical waveguide/DCM results in a received optical signal of uniform (or at least predetermined) channel power.

In step 130, the current channel load for that link (i.e. for that particular optical transmission system, or part of the optical transmission system), is acquired. Thus, information such as the individual channels (e.g. wavelengths) present and the power of each channel is acquired. Such information can be obtained at each add/drop node by means of WDM signal quality monitors. Signal quality monitors are typically not placed in nodes which only contain amplifiers and related equipment, and do not contain any apparatus for adding or dropping channels, as changes in channel count are unlikely to occur in such sections.

Based upon the determined channel load, the likely nonlinear tilt effect is determined (step 140). Again, the likely nonlinear effect can be determined by calibration, or by calculation based upon the relevant fibre properties. Subsequently, the amplifier gain tilt is adjusted so as to counteract the determined nonlinear tilt effect (step 150).

A check is then made as to whether or not there has been a change in channel load (step 160). If there has not been a change in channel load, then a check is made as whether any span parameters have changed i.e. as to whether there has been a change in the optical transmission system that might result in the linear tilt effect changing (step 170).

If the span parameters have not changed, then the transmission system is assumed to be operating in a steady state. Accordingly, after a predetermined interval (step 180), method step 160 is again performed.

However, if at step 170 it is determined that the span parameters have changed, then the method returns to step 110 i.e. an evaluation of the linear tilt effect is again made.

If at step 160 it is indicated that a change in the channel load has started (step 160), then the average gain and the gain tilt of the optical amplifier are maintained at a constant level (step 190) for a predetermined interval.

A check is then made as to whether the change in channel load has ended (step 200). Whilst the channel load is changing, then the amplifier gain is maintained at a constant average gain and gain tilt (i.e. steps 190, 200 are reiterated).

Once it is determined that the channel load is constant (i.e. it has stopped changing), then the effect of nonlinear tilt is again evaluated (step 140), and the amplifier gain tilt adjusted accordingly to counteract the nonlinear tilt effect (step 150).

Although the above method and apparatus has been described with respect to a single transmission system or link, it should be appreciated that the transmission link or optical transmission system would typically form part of a larger optical communications network.

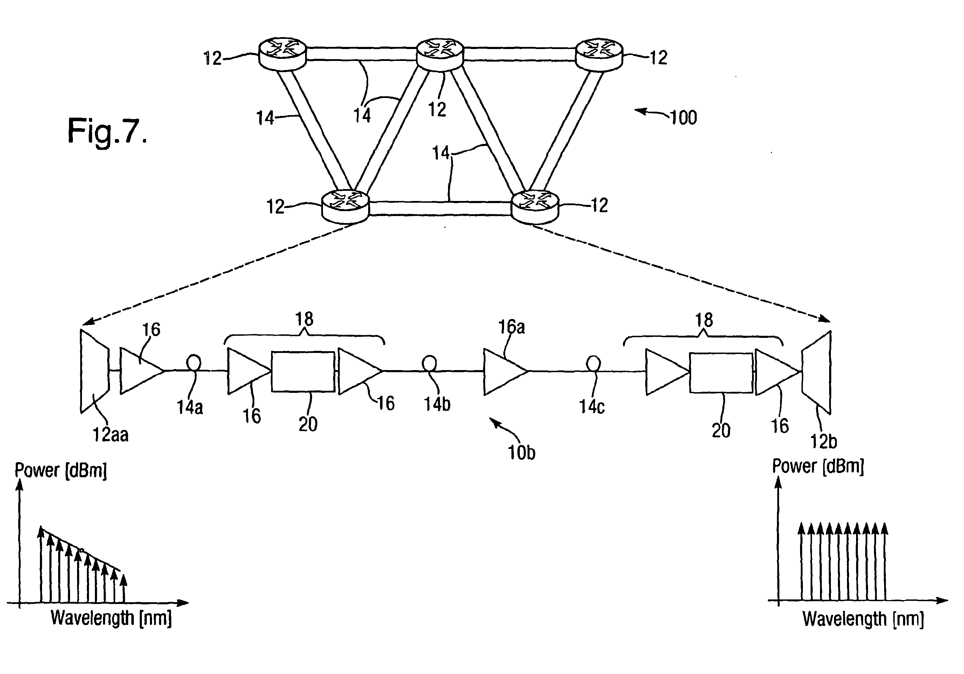

For example, as indicated in figure 7, an optical transmission system 10b in accordance with an embodiment to the present invention would typically form a link 14 between nodes 12 of an optical communication network 100. The network comprises a plurality of nodes 12, interconnected by a plurality of transmission links 14. The network could be a wavelength division multiplex optical communication network. Typically, the network will be an automatically switched optical network. Each node will typically comprise an optical add/drop multiplexer i.e. a multiplexer arranged to act as both a receiver 12b and a transmitter 12a. Preferably, each add/drop multiplexer is in fact a reconfigurable optical add/drop multiplexer, allowing optical channels to be dynamically added or dropped from the optical signal transmitted along the link or optical transmission system to an adjacent node.

Figure 7 includes an expanded view of one link 10b i.e. an optical transmission system within the network 100. The transmission system 10b includes a transmitter 12aa connected to a receiver 12b via several spans 14a, 14b, 14c of optical waveguide. Positioned along the optical waveguide are optical amplifiers 16, and at least one optical amplifier 16a arranged to provide a gain tilt to offset the nonlinear spectral tilt effect i.e. the spectral tilt effect dependent upon a property of the optical signal. Positioned along the optical waveguide span are DCMs 18. Each dispersion compensating module 18 includes two optical amplifiers 16, one positioned either side of a length of dispersion compensating fibre 20 i.e. to provide pre-amplification and post-amplification of the optical signal. The optical amplifier 16a is arranged to offset the nonlinear spectral tilt arising not only from the transmission fibre 14a, 14b, 14c, but also that arising from the dispersion compensating fibre 20.

In this particular embodiment, the spectral tilt apparatus is not implemented as a transmission element having a wavelength dependent attenuation. Instead, the spectral tilt apparatus is provided by the operation of the transmitter 12aa. The transmitter 12aa is arranged to input the optical signal with the optical signal having a wavelength dependent power profile (i.e. a tilt) to offset the linear spectral tilt effect of the optical waveguide and the dispersion compensating fibre i.e. to provide pre-compensation of the optical signal for the linear tilt effect. A graph adjacent the transmitter 12aa shows the power tilt of the optical signal input to the optical waveguide, with a graph adjacent the receiver 12b indicating that the received optical signal comprises channels of uniform power distribution following attenuation of the optical signal by the optical waveguide and DCM.

As shown in Figure 7, a link between two nodes (12aa, 12b) in which signals may be added or dropped, may comprise several sections or spans (14a, 14b, 14c) of optical waveguide. In one implementation, as briefly indicated above, a single optical amplifier can be controlled to provide a gain tilt to offset the nonlinear spectral tilt effect arising from the optical signal travelling along each span (14a, 14b, 14c). However, alternatively, a number of the optical amplifiers within the link between the two nodes 12aa, 12b can be used to provide a gain tilt to offset the nonlinear spectral tilt effect. For example, each amplifier (16, 16a) can be arranged to compensate for the nonlinear tilt effect generated within the previous span. A single controller could theoretically be utilised to control all of the amplifiers to provide that gain tilt. However, more preferably, each relevant optical amplifier contains a respective gain controller arranged to control that optical amplifier to provide the gain tilt to offset the nonlinear spectral tilt effect occurring within one or more adjacent spans (e.g. the preceding span).

Use of such a plurality of optical amplifiers to provide gain tilt would only require a slight modification of the method illustrated in Figure 6. For example, the modified step 140 would become "evaluate nonlinear tilt introduced by current channel load in each transmission span" (preferably also including evaluating the nonlinear tilt introduced by any DCM within that span). Each respective amplifier gain tilt would then be adjusted accordingly i.e. step 150 would become "for each span, adjust gain tilt of associated amplifier to counteract nonlinear tilt only arising within the respective span(s)".

From the foregoing description, various alternatives will be apparent to the skilled person as falling within the scope of the present invention, as defined by the appended claims.

## Claims

1. A method of compensating for spectral tilt in an optical transmission system (10a; 10b), comprising at least one span of optical waveguide (14a; 14b), for transmission of an optical signal and at least one optical amplifier (16a), for amplifying a power of said optical signal, the method comprising:
controlling (150) said optical amplifier (16a) to provide a gain tilt to offset a spectral tilt effect dependent upon a property of said optical signal; the method **characterised in** further comprising:
applying in a separate apparatus to said optical amplifier
a predetermined spectral tilt (120) to the optical signal to offset a spectral tilt effect dependent upon a property of said span and independent of the optical signal power.

2. A method as claimed in Claim 1, wherein the step of applying a predetermined spectral tilt to the optical signal comprises:
attenuating the optical signal using a transmission element (15) having a wavelength dependent attenuation.

3. A method as claimed in Claim 1 or Claim 2, wherein the optical transmission system comprises at least one optical transmitter (12aa) for input of the optical signal to the optical waveguide, and the step of applying a predetermined spectral tilt to the optical signal comprises:
said optical transmitter (12aa) inputting the optical signal to the optical waveguide with the optical signal having a wavelength dependent power profile.

4. A method as claimed in any one of the above claims, wherein said span of optical waveguide (14a) extends between a first node and a second node, the optical signal being transmitted from the first node to the second node, and the step of applying a predetermined spectral tilt to the optical signal is performed at the first node.

5. A method as claimed in any one of the above claims, wherein the spectral tilt effect dependent upon a property of said span comprises a wavelength dependent attenuation of the optical signal by the waveguide.

6. A method as claimed in any one of the above claims, wherein the optical transmission system comprises at least one dispersion compensating module having a wavelength dependent attenuation, the spectral tilt effect dependent upon a property of said span comprising the wavelength dependent attenuation of said dispersion compensating module.

7. A method as claimed in any one of the above claims, further comprising the steps of:
determining at least one value indicative of the spectral tilt effect dependent upon a property of said span; and
determining the predetermined spectral tilt to apply to the optical signal based upon said determined value.

8. A method as claimed in claim 7, wherein said value is determined by making a measurement indicative of a wavelength attenuation of at least said span.

9. A method as claimed in any one of the above claims, wherein the spectral tilt effect dependent upon a property of said span is dependent upon a linear dielectric response of said span.

10. A method as claimed in any one of the above claims, wherein the spectral tilt effect dependent upon a property of said optical signal is dependent upon a nonlinear dielectric response of said span.

11. A method as claimed in any one of the above claims, wherein the spectral tilt effect dependent on a property of said optical signal comprises spectral tilt caused by the optical signal experiencing stimulated raman scattering within the optical waveguide.

12. A method as claimed in claim 11, wherein the optical transmission system comprises a dispersion compensating module, and the spectral tilt effect dependent upon a property of said optical signal comprises spectral tilt due to the optical signal experiencing stimulated raman scattering within the dispersion compensating module.

13. A method as claimed in any one of the above claims, wherein the property of said optical signal is the power of the optical signal.

14. A method as claimed in any one of the above claims, wherein the step of controlling said optical amplifier (16a) comprises:
determining (140) a value indicative of said property of the optical signal; and
setting (150) the gain tilt of said optical amplifier in dependence upon the determined value.

15. A method as claimed in claim 14, wherein the optical signal comprises a plurality of channels, and the step of controlling said optical amplifier comprises:
determining (160) if there is a change in channel loading of the optical signal occurring; and
maintaining (190) the gain tilt of said optical amplifier at a constant level whilst there is a change in channel loading occurring.

16. A data carrier carrying computer readable instructions for controlling a computer to carry out the method of any one of the above claims.

17. A computer apparatus comprising:
a program memory storing processor readable instructions; and
a processor configured to read and execute instructions stored in said program memory,
wherein said processor readable instructions comprise instructions for controlling the processor to carry out the method of any one of claims 1 to 15.

18. An optical transmission system (10a; 10b) comprising at least one span of optical waveguide (14a; 14b) for transmission of an optical signal and at least one optical amplifier (16a) for amplifying a power of said optical signal, the optical transmission system further comprising:
at least one amplifier controller arranged to control said optical amplifier (16a) to provide a gain tilt to offset a spectral tilt effect dependent upon a property of said optical signal; the system **characterised in** further comprising:
a separate spectral tilt apparatus (15; 12aa) arranged to apply a predetermined spectral tilt to the optical signal to offset a spectral tilt effect dependent upon a property of said span and independent of the optical signal power.

19. A system as claimed in claim 18, wherein the spectral tilt apparatus (15) comprises a transmission element having a wavelength dependent attenuation for applying at least a portion of the predetermined spectral tilt by attenuation of the optical signal.

20. A system as claimed in claim 18 or claim 19, wherein the spectral tilt apparatus comprises at least one optical transmitter (12aa) for input of the optical signal to the optical waveguide (14a), said optical transmitter (12aa) being arranged to input the optical signal to the optical waveguide (14a) with the optical signal having a wavelength dependent power profile.

21. A system as claimed in any one of claims 18 to 20, wherein said optical amplifier (16a) comprises a doped fibre amplifier.

22. A system as claimed in any one of claims 18 to 21, wherein said span comprises a plurality of spans (14a, 14b), and said optical amplifier comprises a plurality of optical amplifiers, said amplifier controller being arranged to control said optical amplifiers to provide said gain tilt.

23. A wavelength division multiplexed optical communication network (100), comprising an optical transmission system (10a) as claimed in any one of claims 18 to 22.

## Patentansprüche

1. Verfahren zur Kompensation von spektraler Neigung in einem optischen Übertragungssystem (10a; 10b), das mindestens eine Spanne von Lichtwellenleiter (14a; 14b) zur Übertragung eines optischen Signals und mindestens einen optischen Verstärker (16a) zum Verstärken einer Leistung des optischen Signals umfasst, wobei das Verfahren umfasst:
Steuern (150) des optischen Verstärkers (16a), um eine Verstärkungsneigung bereitzustellen, um einen spektralen Neigungseffekt, der von einer Eigenschaft des optischen Signals abhängig ist, zu verschieben; wobei das Verfahren **dadurch gekennzeichnet ist, dass** es ferner umfasst:
Anwenden in einer separaten Vorrichtung zum optischen Verstärker einer vorbestimmten spektralen Neigung (120) auf das optische Signal, um einen spektralen Neigungseffekt, der von einer Eigenschaft der Spanne abhängig ist und von der Leistung des optischen Signals unabhängig ist, zu verschieben.

2. Verfahren nach Anspruch 1, wobei der Schritt des Anwendens einer vorbestimmten spektralen Neigung auf das optische Signal umfasst:
Dämpfen des optischen Signals unter Verwendung eines Übertragungselements (15) mit einer wellenlängenabhängigen Dämpfung.

3. Verfahren nach Anspruch 1 oder 2, wobei das optische Übertragungssystem mindestens einen optischen Sender (12aa) zur Eingabe des optischen Signals in den Lichtwellenleiter umfasst, und der Schritt des Anwendens einer vorbestimmten spektralen Neigung auf das optische Signal umfasst, dass:
der optische Sender (12aa) das optische Signal in den Lichtwellenleiter eingibt, wobei das optische Signal ein wellenlängenabhängiges Leistungsprofil aufweist.

4. Verfahren nach einem der vorhergehenden Ansprüche, wobei sich die Spanne von Lichtwellenleiter (14a) zwischen einem ersten und einem zweiten Knoten erstreckt, das optische Signal vom ersten Knoten zum zweiten Knoten übertragen wird, und der Schritt des Anwendens einer vorbestimmten spektralen Neigung auf das optische Signal am ersten Knoten ausgeführt wird.

5. Verfahren nach einem der vorhergehenden Ansprüche, wobei der spektrale Neigungseffekt, der von einer Eigenschaft der Spanne abhängig ist, eine wellenlängenabhängige Dämpfung des optischen Signals durch den Wellenleiter umfasst.

6. Verfahren nach einem der vorhergehenden Ansprüche, wobei das optische Übertragungssystem mindestens ein Dispersionskompensationsmodul mit einer wellenlängenabhängigen Dämpfung umfasst, der spektrale Neigungseffekt, der von einer Eigenschaft der Spanne abhängig ist, die wellenlängenabhängige Dämpfung des Dispersionskompensationsmoduls umfasst.

7. Verfahren nach einem der vorhergehenden Ansprüche, ferner umfassend die folgenden Schritte:
Bestimmen mindestens eines Wertes, der den spektralen Neigungseffekt anzeigt, der von einer Eigenschaft der Spanne abhängig ist; und
Bestimmen der vorbestimmten spektralen Neigung zum Anwenden auf das optische Signal basierend auf dem bestimmten Wert.

8. Verfahren nach Anspruch 7, wobei der Wert durch Durchführen einer Messung bestimmt wird, die eine Wellenlängendämpfung mindestens der Spanne anzeigt.

9. Verfahren nach einem der vorhergehenden Ansprüche, wobei der spektrale Neigungseffekt, der von einer Eigenschaft der Spanne abhängig ist, von einer linearen dielektrischen Antwort der Spanne abhängt.

10. Verfahren nach einem der vorhergehenden Ansprüche, wobei der spektrale Neigungseffekt, der von einer Eigenschaft des optischen Signals abhängig ist, von einer nichtlinearen dielektrischen Antwort der Spanne abhängt.

11. Verfahren nach einem der vorhergehenden Ansprüche, wobei der spektrale Neigungseffekt, der von einer Eigenschaft des optischen Signals abhängig ist, spektrale Neigung umfasst, die durch das optische Signal verursacht wird, das stimulierte Raman-Streuung innerhalb des Lichtwellenleiters erfährt.

12. Verfahren nach Anspruch 11, wobei das optische Übertragungssystem ein Dispersionskompensationsmodul umfasst, und der spektrale Neigungseffekt, der von einer Eigenschaft des optischen Signals abhängig ist, spektrale Neigung infolgedessen umfasst, dass das optische Signal stimulierte Raman-Streuung innerhalb des Dispersionskompensationsmoduls erfährt.

13. Verfahren nach einem der vorhergehenden Ansprüche, wobei die Eigenschaft des optischen Signals die Leistung des optischen Signals ist.

14. Verfahren nach einem der vorhergehenden Ansprüche, wobei der Schritt des Steuerns des optischen Verstärkers (16a) umfasst:
Bestimmen (140) eines Wertes, der die Eigenschaft des optischen Signals anzeigt; und
Festlegen (150) der Verstärkungsneigung des optischen Verstärkers in Abhängigkeit vom bestimmten Wert.

15. Verfahren nach Anspruch 14, wobei das optische Signal eine Mehrzahl von Kanälen umfasst, und der Schritt des Steuerns des optischen Verstärkers umfasst:
Bestimmen (160), ob eine Änderung der Kanalbelegung des optischen Signals eintritt; und
Halten (190) der Verstärkungsneigung des optischen Verstärkers auf einem konstanten Niveau, während eine Änderung der Kanalbelegung eintritt.

16. Datenträger, der computerlesbare Befehle zum Steuern eines Computers zum Ausführen des Verfahrens nach einem der vorhergehenden Ansprüche trägt.

17. Computervorrichtung, umfassend:
einen Programmspeicher, der prozessorlesbare Befehle speichert; und
einen Prozessor, der so konfiguriert ist, dass er Befehle ausliest und ausführt, die in dem Programmspeicher speichert sind,
wobei die prozessorlesbaren Befehle Befehle zum Steuern des Prozessors zum Ausführen des Verfahrens nach einem der Ansprüche 1 bis 15 umfassen.

18. Optisches Übertragungssystem (10a; 10b), umfassend mindestens eine Spanne von Lichtwellenleiter (14a; 14b) zur Übertragung eines optischen Signals und mindestens einen optischen Verstärker (16a) zum Verstärken einer Leistung des optischen Signals, wobei das optische Übertragungssystem umfasst:
mindestens eine Verstärkersteuerung, die so ausgelegt ist, dass sie den optischen Verstärker (16a) steuert, um eine Verstärkungsneigung bereitzustellen, um einen spektralen Neigungseffekt, der von einer Eigenschaft des optischen Signals abhängig ist, zu verschieben; wobei das System **dadurch gekennzeichnet ist, dass** es ferner umfasst:
eine separate Spektralneigungsvorrichtung (15; 12aa), die so ausgelegt ist, dass sie eine vorbestimmte spektrale Neigung auf das optische Signal anwendet, um einen spektralen Neigungseffekt, der von einer Eigenschaft der Spanne abhängig ist und von der Leistung des optischen Signals unabhängig ist, zu verschieben.

19. System nach Anspruch 18, wobei die Spektralneigungsvorrichtung (15) ein Übertragungselement mit einer wellenlängenabhängigen Dämpfung zum Anwenden wenigstens eines Teils der vorbestimmten spektralen Neigung durch Dämpfung des optischen Signals umfasst.

20. System nach Anspruch 18 oder 19, wobei die Spektralneigungsvorrichtung mindestens einen optischen Sender (12aa) zur Eingabe des optischen Signals in den Lichtwellenleiter (14a) umfasst, wobei der optische Sender (12aa) so ausgelegt ist, dass er das optische Signal in den Lichtwellenleiter (14a) eingibt, wobei das optische Signal ein wellenlängenabhängiges Leistungsprofil aufweist.

21. System nach einem der Ansprüche 18 bis 20, wobei der optische Verstärker (16a) einen dotierten Faserverstärker umfasst.

22. System nach einem der Ansprüche 18 bis 21, wobei die Spanne eine Mehrzahl von Spannen (14a, 14b) umfasst, und der optische Verstärker eine Mehrzahl von optischen Verstärkern umfasst, wobei die Verstärkersteuerung so ausgelegt ist, dass sie die optischen Verstärker steuert, um die Verstärkungsneigung bereitzustellen.

23. Optisches Wellenlängenmultiplex-Kommunikationsnetz (100), umfassend ein optisches Übertragungssystem (10a) nach einem der Ansprüche 18 bis 22.

## Revendications

1. Procédé de compensation du basculement spectral dans un système de transmission optique (10a ;10b), comprenant au moins un arc de guide d'ondes optique (14a ;14b), pour la transmission d'un signal optique et au moins un amplificateur optique (16a), pour amplifier une puissance dudit signal optique, le procédé comprenant de :
commander (150) ledit amplificateur optique (16a) afin de fournir un basculement de gain pour décaler un effet de basculement spectral fonction d'une propriété dudit signal optique ; le procédé étant **caractérisé en ce qu'**il comprend en outre de :
appliquer dans un dispositif séparé dudit amplificateur optique un basculement spectral prédéterminé (120) au signal optique pour décaler un effet de basculement spectral en fonction d'une propriété dudit arc et indépendamment de la puissance de signal optique.

2. Procédé selon la revendication 1, dans lequel l'étape d'application d'un basculement spectral prédéterminé au signal optique comprend de :
atténuer le signal optique en utilisant un élément de transmission (15) ayant une atténuation fonction de la longueur d'onde.

3. Procédé selon les revendications 1 ou 2, dans lequel le système de transmission optique comprend au moins un émetteur optique (12aa) pour entrer le signal optique dans le guide d'ondes optique, et l'étape d'application d'un basculement spectral prédéterminé au signal optique comprend que :
ledit émetteur optique (12aa) entre le signal optique dans le guide d'ondes optique avec le signal optique ayant u profil de puissance fonction de la longueur d'onde.

4. Procédé selon une quelconque des revendications précédentes, dans lequel ledit arc de guide d'ondes optique (14a) s'étend entre un premier noeud et un second noeud, le signal optique étant transmis du premier noeud au second noeud, et l'étape d'application d'un basculement spectral prédéterminé au signal optique est effectuée au niveau du premier noeud.

5. Procédé selon une quelconque des revendications précédentes, dans lequel l'effet de basculement spectral fonction d'une propriété dudit arc comprend une atténuation fonction de la longueur d'onde du signal optique par le guide d'ondes.

6. Procédé selon une quelconque des revendications précédentes, dans lequel le système de transmission optique comprend au moins un module de compensation de dispersion ayant une atténuation fonction de la longueur d'onde, l'effet de basculement spectral fonction d'une propriété dudit arc comprenant l'atténuation fonction de la longueur d'onde dudit module de compensation de dispersion.

7. Procédé selon une quelconque des revendications précédentes, comprenant en outre les étapes consistant à :
déterminer au moins une valeur indicative de l'effet de basculement spectral en fonction d'une propriété dudit arc ; et
déterminer le basculement spectral prédéterminé à appliquer sur la base de ladite valeur déterminée.

8. Procédé selon la revendication 7, dans lequel ladite valeur est déterminée en effectuant une mesure indicative d'une atténuation de longueur d'onde d'au moins ledit arc.

9. Procédé selon une quelconque des revendications précédentes, dans lequel l'effet de basculement spectral fonction d'une propriété dudit arc est fonction d'une réponse diélectrique linéaire dudit arc.

10. Procédé selon une quelconque des revendications précédentes, dans lequel l'effet de basculement spectral fonction d'une propriété dudit signal optique est fonction d'une réponse diélectrique non linéaire dudit arc.

11. Procédé selon une quelconque des revendications précédentes, dans lequel l'effet de basculement spectral fonction d'une propriété dudit signal optique comprend un basculement spectral causé par le signal optique subissant une diffusion Raman stimulée à l'intérieur du guide d'ondes optique.

12. Procédé selon la revendication 11, dans lequel le système de transmission optique comprend un module de compensation de dispersion, et l'effet de basculement spectral fonction d'une propriété dudit signal optique comprend un basculement spectral dû au fait que le signal optique subit une dispersion Raman stimulée à l'intérieur du module de compensation de dispersion.

13. Procédé selon une quelconque des revendications précédentes, dans lequel la propriété dudit signal optique est la puissance du signal optique.

14. Procédé selon une quelconque des revendications ci-dessus, dans lequel l'étape de commande dudit amplificateur optique (16a) comprend de :
déterminer (140) une valeur indicative de ladite propriété du signal optique ; et
régler (150) le basculement de gain dudit amplificateur optique en fonction de la valeur déterminée.

15. Procédé selon la revendication 14, dans lequel le signal optique comprend une pluralité de canaux, et l'étape de commande dudit amplificateur optique comprend de :
déterminer (160) si il y a un changement de charge du canal quand le signal optique se produit ; et
conserver (190) le basculement de gain dudit amplificateur optique à un niveau constant pendant qu'un changement de charge du canal se produit.

16. Support de données portant des instructions lisibles par ordinateur pour commander un ordinateur afin de mettre en oeuvre le procédé selon une quelconque des revendications précédentes.

17. Dispositif informatique comprenant :
une mémoire de programme mémorisant des instructions lisibles par un processeur ; et
un processeur configuré pour lire et exécuter des instructions mémorisées dans ladite mémoire de programme,
dans lequel lesdites instructions lisibles par un processeur comprennent des instructions pour commander le processeur afin de mettre en oeuvre le procédé selon une quelconque des revendications 1 à 15.

18. Système de transmission optique (10a ;10b) comprenant au moins un arc de guide d'ondes optique (14a ;14b) pour la transmission d'un signal optique et au moins un amplificateur optique (16a) pour amplifier une puissance dudit signal optique, le système de transmission optique comprenant en outre :
au moins un contrôleur d'amplificateur agencé pour commander ledit amplificateur optique (16a) afin de fournir un basculement d egain pour décaler un effet de basculement spectral fonction d'une propriété dudit signal optique ; le système étant **caractérisé en ce qu'**il comprend en outre :
un dispositif de basculement spectral séparé (15 ; ;12aa) agencé afin d'appliquer un basculement spectral prédéterminé au signal optique pour décaler un effet de basculement spectral en fonction d'une propriété dudit arc et indépendamment de la puissance de signal optique.

19. Système selon la revendication 18, dans lequel le dispositif de basculement spectral (15) comprend un élément de transmission ayant une atténuation fonction de la longueur d'onde pour appliquer au moins une portion du basculement spectral prédéterminé par atténuation du signal optique.

20. Système selon les revendications 18 ou 19, dans lequel le dispositif de basculement spectral comprend au moins un émetteur optique (12aa) pour entrer le signal optique dans le guide d'ondes optique (14a), ledit émetteur optique (12aa) étant agencé pour entrer le signal optique dans le guide d'ondes optiques (14a) avec le signal optique ayant un profil de puissance fonction de la longueur d'onde.

21. Système selon une quelconque des revendications 18 à 20, dans lequel ledit amplificateur optique (16a) comprend un amplificateur à fibre dopée.

22. Système selon une quelconque des revendications 18 à 21, dans lequel ledit arc comprend une pluralité d'arcs (14a,14b), et ledit amplificateur optique comprend une pluralité d'amplificateurs optiques, ledit contrôleur d'amplificateur étant agencé pour commander lesdits amplificateurs optiques afin de fournir ledit basculement de gain.

23. Réseau de communication optique multiplexés par répartition de longueur d'onde (100), comprenant un système de transmission optique (10a) selon une quelconque des revendications 18 à 22.
